# EUROPÄISCHE PATENTSCHRIFT

(11) **EP 2 896 861 B1**
(45) Veröffentlichungstag und Bekanntmachung des Hinweises auf die Patenterteilung: **12.07.2017**
(21) Anmeldenummer: 14199160.4
(22) Anmeldetag: 19.12.2014
(51) Int. Cl.: F16L 3/26, H02G 3/32

(54) **VERSTELLBARE MONTAGEKONSOLE ZUR BEFESTIGUNG EINES LEITUNGSFÜHRUNGSKANALS AN EINER WAND**
ADJUSTABLE INSTALLATION CONSOLE FOR FITTING A LINE GUIDANCE CHANNEL TO A WALL
CONSOLE DE MONTAGE RÉGLABLE DESTINÉE À LA FIXATION D'UN CANAL DE GUIDAGE DE CONDUITE SUR UN MUR

(30) Priorität: 20.12.2013 DE 202013105857 U
(43) Veröffentlichungstag der Anmeldung: 22.07.2015
(73) Patentinhaber: REHAU AG + Co, 95111 Rehau (DE)
(72) Erfinder: Eckert, Siegfried, 90556 Cadolzburg (DE); Friedrich, Jochen, 95119 Naila (DE)

(56) Entgegenhaltungen:
- EP-A2- 2 378 127
- DE-A1- 19 532 681
- DE-U1-202007 015 607
- DE-U1-202008 011 723
- US-A1- 2004 104 322

## Beschreibung

Die vorliegende Erfindung betrifft eine verstellbare Montagekonsole zur Befestigung eines Leitungsführungskanals an einer Wand, wobei die verstellbare Montagekonsole ein Wandbefestigungsteil, mindestens ein mit dem Wandbefestigungsteil in Eingriff befindliches, erstes Teleskopelement, mindestens ein zweites Teleskopelement und ein Kanalbefestigungselement umfasst.

Derartige verstellbare Montagekonsolen sind im Stand der Technik bekannt. Beispielsweise beschreibt die EP 2 058 913 A2 eine derartige, aus Blechbiegeteilen hergestellte Montagekonsole, bei der ein teleskopierbarer Ausleger seitlich am Befestigungsteil angeordnet ist und das Kanalbefestigungselement wiederum seitlich an dem teleskopierbaren Ausleger angeordnet ist. Nachteilig an einer derartigen Montagekonsole wird gesehen, dass sie insbesondere bei ungleichmäßig angreifenden Kräften eine unzureichende Stabilität aufweist. Darüber hinaus ist die Montage in zumindest einer Ecke des Raums erschwert.

Verstellbare Montagekonsolen mit den Merkmalen gemäß dem Oberbegriff des Patentanspruchs 1 sind aus der DE 195 32 681 A1 und der US 2004/0104322 A1 bekannt.

Dementsprechend liegt der vorliegenden Erfindung die Aufgabe zugrunde, eine verstellbare Montagekonsole zur Befestigung eines Leitungsführungskanals an einer Wand zur Verfügung zu stellen, die die Nachteile des Standes der Technik überwinden. Insbesondere soll die erfindungsgemäße verstellbare Montagekonsole eine verbesserte Stabilität besitzen. Darüber hinaus soll die erfindungsgemäße verstellbare Montagekonsole bevorzugt in jeder Raumecke leicht zu montieren sein.

Diese und andere Aufgaben werden durch eine verstellbare Montagekonsole mit den Merkmalen des Patentanspruchs 1 gelöst. Bevorzugte Ausführungsformen der erfindungsgemäßen verstellbaren Montagekonsole sind in den davon abhängigen Ansprüchen beschrieben.

Gemäß der vorliegenden Erfindung wurde erkannt, dass die Stabilität einer verstellbaren Montagekonsole dadurch verbessert werden kann, dass bei einer Krafteinwirkung auf die Montagekonsole eine Kraftaufnahme zumindest teilweise symmetrisch in die Montagekonsole erfolgt. Dadurch treten an der Montagekonsole reduzierte Drehmomente auf, wodurch eine verbesserte Stabilität bewirkt wird. Erfindungsgemäß wird dies dadurch erzielt, dass das Wandbefestigungsteil spiegelsymmetrisch zu einer Spiegelebene ausgebildet ist, die das Wandbefestigungsteil in seiner Längsrichtung schneidet. Dabei handelt es sich bei dem Wandbefestigungsteil vorzugsweise um ein Wandbefestigungsprofil. Darüber hinaus hat eine derartige Anordnung hat eine symmetrische Aufnahme der auf die erfindungsgemäße verstellbare Montagekonsole einwirkenden Kräfte in das Wandbefestigungsteil zufolge, was zu einer erhöhten Stabilität der resultierenden erfindungsgemäßen Montagekonsole beiträgt, wenn das Wandbefestigungsteil mindestens zwei Elementöffnungen zur Durchführung von Halteelementen des ersten Teleskopelements umfasst, wobei mindestens eine Elementöffnung entlang der Schnittgeraden der Spiegelebene mit dem Wandbefestigungsteil angeordnet ist und/oder mindestens zwei Elementöffnungen paarweise symmetrisch zur Schnittgeraden der Spiegelebene mit dem Wandbefestigungsteil angeordnet sind.

Dementsprechend liegt die vorliegende Erfindung in der Bereitstellung einer verstellbaren Montagekonsole zur Befestigung eines Leitungsführungskanals an einer Wand, wobei die erfindungsgemäße verstellbare Montagekonsole ein Wandbefestigungsteil, das Wandbefestigungsteil spiegelsymmetrisch zu einer Spiegelebene ausgebildet ist, die das Wandbefestigungsteil in seiner Längsrichtung schneidet, mindestens ein mit dem Wandbefestigungsteil in Eingriff befindliches, erstes Teleskopelement, mindestens ein zweites Teleskopelement und ein Kanalbefestigungselement umfasst, wobei das Wandbefestigungsteil mindestens zwei Elementöffnungen zur Durchführung von Halteelementen des ersten Teleskopelements umfasst, wobei mindestens eine Elementöffnung entlang der Schnittgeraden der Spiegelebene mit dem Wandbefestigungsteil angeordnet ist und/oder mindestens zwei Elementöffnungen paarweise symmetrisch zur Schnittgeraden der Spiegelebene mit dem Wandbefestigungsteil angeordnet sind.

Hinsichtlich der erfindungsgemäßen verstellbaren Montagekonsole ist es bevorzugt, dass das Wandbefestigungsteil mindestens zwei Durchgangsbohrungen zur Durchführung von Wandbefestigungselementen zur Wandbefestigung umfasst, wobei mindestens eine der Durchgangsbohrungen entlang der Schnittgeraden der Spiegelebene mit dem Wandbe festigungsteil angeordnet ist und/oder mindestens zwei Durchgangsbohrungen paarweise symmetrisch zur Schnittgeraden der Spiegelebene mit dem Wandbefestigungsteil angeordnet sind. Eine derartige Anordnung der Durchgangsbohrungen für Wandbefestigungselemente (beispielsweise Schrauben) bewirkt eine symmetrische Übertragung der auf die erfindungsgemäße verstellbare Montagekonsole einwirkenden Kräfte in die Wand und trägt dadurch ebenfalls zur Stabilität der erfindungsgemäßen Montagekonsole bei.

Es hat sich als günstig erwiesen, wenn die erfindungsgemäße verstellbare Montagekonsole ein erstes Teleskopelement und zwei zweite Teleskopelemente umfasst, wobei das erste Teleskopelement zwischen den zweiten Teleskopelementen angeordnet ist. Dies trägt ebenfalls zu einem symmetrischen Kraftverlauf innerhalb der erfindungsgemäßen Montagekonsole bei Krafteinwirkung auf diese bei. Dabei ist es besonders bevorzugt, wenn die beiden zweiten Teleskopelement als Längsteile ausgebildet sind, die an beiden Seiten des eher plattenartig ausgebildeten ersten Teleskopelements entlang gleiten können. Hierbei ist es besonders bevorzugt, wenn die zweiten Teleskopelemente zumindest abschnittweise an dem ersten Teleskopelement anliegen.

Aus Stabilitätsgründen ist es weiterhin bevorzugt, wenn das erste Teleskopelement zumindest abschnittsweise in der Symmetrieebene angeordnet ist. Besonders bevorzugt ist es im Wesentlich vollständig symmetrisch zur Symmetrieebene angeordnet. Wie hierin verwendet bedeutet der Begriff" im Wesentlich vollständig symmetrisch zur Symmetrieebene", dass mindestens 90 %, insbesondere mindestens 95 % des betreffenden Bauteils spiegelsymmetrisch zur Symmetrieebene sind.

Gleichermaßen kann es hilfreich sein, wenn die zweiten Teleskopelemente zumindest abschnittsweise spiegelsymmetrisch zur Spiegelebene angeordnet sind.

Es kann auch von Nutzen sein, wenn die zweiten Teleskopelemente an ihrem dem Kanalbefestigungselement zugewandten Ende jeweils einen umgebogenen Bereich aufweisen, über den die zweiten Teleskopelemente jeweils mit dem Kanalbefestigungselement verbindbar sind. Dies bewirkt eine stabile Befestigung des Kanalbefestigungselements an den zweiten Teleskopelementen.

Es kann auch hilfreich sein, wenn das Kanalbefestigungselement mindestens ein Halteelement für einen Leitungsführungskanal umfasst. Dies erleichtert die Montage des Leitungsführungskanals an der erfindungsgemäßen verstellbaren Montagekonsole. Bevorzugt ist das Halteelement für einen Leitungsführungskanal einstückig mit dem Kanalbefestigungselement ausgebildet.

Ebenso kann es sich als günstig erweisen, wenn erste Teleskopelemente mit unterschiedlich weiter Ausladung mit dem Wandbefestigungsteil verbindbar sind und/oder zweite Teleskopelemente mit unterschiedlich weiter Ausladung mit dem ersten Teleskopelement verbindbar sind. Auf diese Weise ist gewährleistet, dass mit wenigen unterschiedlichen Einzelteilen ein Satz erfindungsgemäßer verstellbarer Montagekonsolen bereitgestellt werden kann, über den unterschiedliche Abstände zwischen der Wand und den an der erfindungsgemäßen Montagekonsole zu befestigenden Leitungsführungskanal erzielt werden können, wobei zumindest das Wandbefestigungsteil und das Kanalbefestigungselement für sämtliche Ausladungen eingesetzt werden können.

Um eine auch bei Krafteinwirkung stabile und exakt justierbare Winkeleinstellung der erfindungsgemäßen verstellbaren Montagekonsole zu erlauben, ist es bevorzugt, dass die erfindungsgemäße verstellbare Montagekonsole weiter ein mit dem Wandbefestigungsteil in Eingriff befindliches Winkelverstellelement umfasst, das nicht mit dem mindestens einen ersten Teleskopelement, nicht mit dem mindestens einen zweiten Teleskopelement und nicht mit dem Kanalbefestigungselement in Wirkverbindung steht. Auf diese Weise ist gewährleistet, dass die Winkelverstellung nicht zwischen einzelnen Elementen der Montagekonsole selbst, sondern zwischen dem Wandbefestigungsteil der Montagekonsole und der Wand, an der die Montagekonsole über das Wandbefestigungsteil angebracht ist, vorgenommen wird. Dadurch kann die Stabilität und die Präzision der Winkeleinstellung einer verstellbaren Montagekonsole verbessert werden.

Hinsichtlich der erfindungsgemäßen verstellbaren Montagekonsole ist es ebenso bevorzugt, dass das Winkelverstellelement haltend in einer Durchgangsbohrung des Wandbefestigungsteils aufgenommen ist. Auf diese Weise wird das Winkelverstellelement einfach und stabil an der erfindungsgemäßen verstellbaren Montagekonsole festgelegt.

Ebenso kann es günstig sein, wenn das Winkelverstellelement als Stützfuß ausgebildet ist. Eine derartige Ausgestaltung des Winkelverstellelements der erfindungsgemäßen verstellbaren Montagekonsole als Stützfuß trägt weiter zur Stabilität der Montagekonsole bei.

Es kann auch von Vorteil sein, wenn das Winkelverstellelement an seiner Außenseite ein Außengewinde aufweist, das mit einem in die Durchgangsbohrung des Wandbefestigungsteils eingebrachten Innengewinde kooperiert. Ebenso kann es günstig sein, wenn das Winkelverstellelement eine mit einem Gewinde versehene Öffnung aufweist, das mit einem Außengewinde eines Befestigungselements in Eingriff bringbar ist. Beide Ausgestaltungen erlauben eine präzise Einstellung des Winkels zwischen zwischen dem Wandbefestigungsteil der erfindungsgemäßen verstellbaren Montagekonsole und der Wand.

In einer besonders bevorzugten Ausführungsform ist durch eine Durchgangsbohrung durch das Wandbefestigungsteil der erfindungsgemäßen verstellbaren Montagekonsole zusätzlich zu einem Befestigungselement ein Stützfuß mit einer mit einem Gewinde versehenen Öffnung geführt, der an seiner Außenseite ein Außengewinde aufweist, durch das der Stützfuß in ein komplementäres Gewinde in der Wandung der Durchgangsbohrung des Wandbefestigungsteils geführt ist. Das Befestigungselement umfasst ein Außengewinde, über das der Stützfuß mit dem Befestigungselement in Wirkverbindung steht. Im an einer Wand montierten Zustand kann die Winkeleinstellung bzw. der Neigungswinkel des Wandbefestigungsteils und damit der gesamten erfindungsgemäßen verstellbaren Montagekonsole relativ zur Wand durch Drehen des Stützfußes relativ zum Befestigungselement erfolgen.

Um eine einfache und gleichmäßige Montage einer verstellbaren Montagekonsole in den Raumecken zu ermöglichen, kann es von Vorteil sein, wenn das Kanalbefestigungselement der erfindungsgemäßen verstellbaren Montagekonsole eine Vielzahl von Verbindungsanordnungen aufweist, die ein Versetzen des Kanalbefestigungselements relativ zu dem mindestens einen zweiten Teleskopelement in zwei Raumrichtungen ermöglichen. So kann die Position des Kanalbefestigungselements relativ zum zweiten Teleskopelement verändert und die geänderte Position dann fixiert werden kann. Die Verbindungsanordnungen sind dabei vorzugsweise so gewählt, dass sie ein Versetzen des Kanalbefestigungselements relativ zum zweiten Teleskopelement in zwei Raumrichtungen (im an der Wand montierten Zustand in horizontaler und vertikaler Richtung) ermöglichen. Durch das Versetzen in horizontaler Richtung, das insbesondere durch Verwendung anderer Verbindungsanordnungen zur Erzeugung der Verbindung zwischen Kanalbefestigungselement und zweitem Teleskopelement erfolgen kann, wird eine gleichmäßige Anordnung der erfindungsgemäßen verstellbaren Montagekonsole in allen Ecken eines Raums ermöglicht.

Das Versetzen in vertikaler Richtung erlaubt die Anpassung der erfindungsgemäßen Montagekonsole auf unterschiedliche Kanaldimensionen.

Es kann sich hierbei als günstig erweisen, wenn die Vielzahl von Verbindungsanordnungen mindestens zwei identische Verbindungsanordnungen umfasst. Dies vereinfacht die Herstellung des Wandbefestigungsteils der erfindungsgemäßen verstellbaren Montagekonsole.

Darüber hinaus kann es von Nutzen sein, wenn mindestens eine der Vielzahl von Verbindungsanordnungen als Ausnehmung des Kanalbefestigungselements mit einem Hauptabschnitt und mindestens zwei vorzugsweise orthogonal dazu angeordneten Nebenabschnitten ausgebildet ist, wobei der Hauptabschnitt und die Nebenabschnitte jeweils einen Winkel zueinander einschließen. Auf diese Weise ist eine einfache Ausgestaltung gewährleistet, die ein Versetzen des Kanalbefestigungselements relativ zu dem mindestens einen zweiten Teleskopelement in zwei Raumrichtungen in besonders einfacher Weise ermöglicht. Dabei hat es sich als besonders günstig erwiesen, wenn der Hauptabschnitt und die Nebenabschnitte jeweils einen im Wesentlichen rechten Winkel zueinander einschließen.

Ebenso kann es von Vorteil sein, wenn das mindestens eine zweite Teleskopelement jeweils an einem Ende einen umgebogenen Bereich umfasst, über den jeweils eine Verbindung, vorzugsweise eine Schraubverbindung, zum Kanalbefestigungselement erfolgt. Auf diese Weise ist ein einfaches und schnell durchführbares Versetzen des Kanalbefestigungselements relativ zu dem mindestens einen zweiten Teleskopelement gewährleistet.

Im Folgenden soll die Erfindung anhand der in den Figuren dargestellten, nicht einschränkenden Ausführungsbeispielen näher beschrieben werden. Darin zeigen:
- Fig. 1: eine perspektivische Ansicht einer verstellbaren Montagekonsole gemäß einer Ausführungsform der vorliegenden Erfindung;
- Fig. 2: eine Draufsicht auf die in Fig. 1 dargestellte erfindungsgemäße Montagekonsole mit eingezeichneter Symmetrieebene;
- Fig. 3: eine Längsschnittdarstellung der in Fig. 1 gezeigten erfindungsgemäßen Montagekonsole entlang der Symmetrieebene;
- Fig. 4: eine weitere perspektivische Darstellung der in den Figuren 1 bis 3 gezeigten erfindungsgemäßen Montagekonsole; und
- Fig. 5: eine perspektivische Ansicht einer verstellbaren Montagekonsole gemäß einer weiteren Ausführungsform der vorliegenden Erfindung mit daran montiertem Leitungsführungskanal.

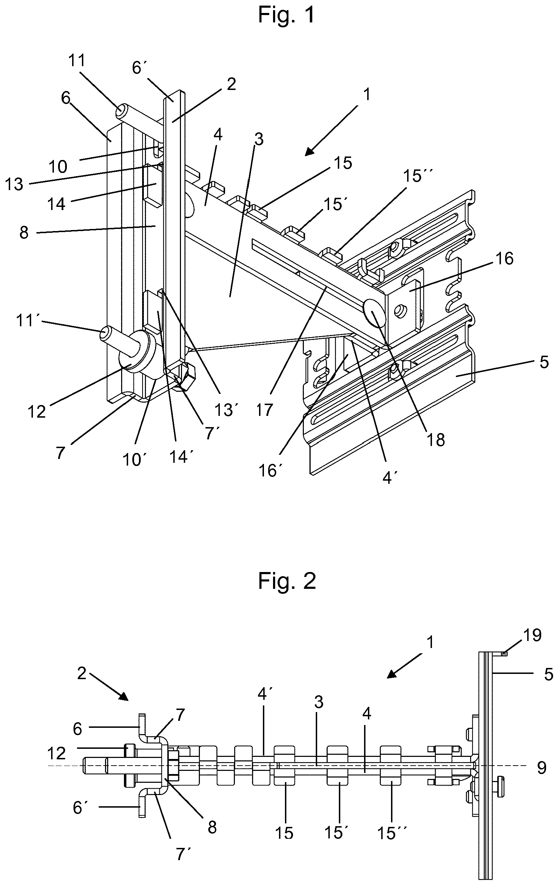

In Fig. 1 ist eine perspektivische Ansicht einer erfindungsgemäßen verstellbaren Montagekonsole 1 zur Befestigung von Leistungsführungskanälen 20 (in Fig. 1 nicht dargestellt). Die erfindungsgemäße verstellbare Montagekonsole 1 umfasst ein Wandbefestigungsteil 2, ein erstes Teleskopelement 3, zwei zweite Teleskopelemente 4, 4' und ein Kanalbefestigungselement 5. Diese Bauteile der erfindungsgemäßen verstellbaren Montagekonsole 1, also das Wandbefestigungsteil 2, das erste Teleskopelement 3, die zweiten Teleskopelemente 4, 4' und das Kanalbefestigungselement 5, sind bevorzugt aus Metall, insbesondere aus Stahl, Aluminium oder einer Aluminium-Zink-Druckgusslegierung hergestellt. Dabei sind vorzugsweise alle diese Bauteile der erfindungsgemäßen verstellbaren Montagekonsole 1 aus demselben Material; alternativ können die einzelnen Bauteile auch aus unterschiedlichen Materialien hergestellt sein.

In der in Fig. 2 gezeigten Ausführungsform der erfindungsgemäßen verstellbaren Montagekonsole 1 ist das Wandbefestigungsteil 2 als Blechbiegeteil aus Stahl hergestellt. Im Querschnitt (Fig. 2) umfasst das Wandbefestigungsteil 2 zwei Anlageabschnitte 6, 6', zwei Übergangsabschnitte 7, 7' und einen Verbindungsabschnitt 8, der im Querschnitt im Zentrum des Wandbefestigungsteils 2 angeordnet und über die beiden Übergangsabschnitte 7, 7' mit den Anlageabschnitten 6, 6' verbunden ist. Das Wandbefestigungsteil 2 ist symmetrisch zu einer Spiegelebene 9 ausgebildet, die in der in Fig. 1 gezeigten Ausführungsform senkrecht zu den beiden Anlageabschnitten 6, 6' und mittig durch den Verbindungsabschnitt 8 verläuft.

Entlang der Schnittgeraden der Spiegelebene 9 mit dem Wandbefestigungsteil 2 weist das Wandbefestigungsteil 2 zwei Durchgangsbohrungen 10, 10' auf. Durch die beiden Durchgangsbohrungen 10, 10' ist jeweils ein Befestigungselement 11, 11' zur Befestigung der erfindungsgemäßen verstellbaren Montagekonsole 1 an einer Wand geführt. Während die Durchgangsbohrung 10' im Wesentlichen kreisförmig ausgeführt ist, ist die Durchgangsbohrung 10 oval ausgestaltet. Beide Durchgangsbohrungen 10, 10' können unabhängig voneinander vorzugsweise oval oder kreisförmig ausgeführt sein. In der in Fig. 1 dargestellten Ausführungsform sind die Befestigungselemente 11, 11' als Schrauben ausgebildet. Zusätzlich dazu ist in das Außengewinde des Befestigungselement 11' ein als Stützfuß 12 mit komplementärem Innengewinde ausgebildetes Winkelverstellelement 12 eingedreht, über den die Winkeleinstellung zwischen der Wand und der daran befestigten erfindungsgemäßen verstellbaren Montagekonsole erfolgt. In alternativen Ausführungsformen kann sich auch nur eine Durchgangsbohrung 10, 10' auf der Schnittgeraden zwischen der Spiegelebene 9 und dem Wandbefestigungsteil 2 befinden, während weitere Durchgangsbohrungen symmetrisch zur Spiegelebene 9 in dem Wandbefestigungsteil 2 ausgebildet sind. Ebenso ist es denkbar, dass das Wandbefestigungsteil 2 der erfindungsgemäßen verstellbaren Montagekonsole 1 ausschließlich über Durchgangsbohrungen 10, 10' verfügt, die zueinander paarweise spiegelsymmetrisch zur Spiegelebene 9 angeordnet sind.
Weiter weist das Wandbefestigungsteil 2 der erfindungsgemäßen verstellbaren Montagekonsole 1 entlang der Schnittgeraden der Spiegelebene 9 mit dem Verbindungsabschnitt 8 zwei Elementöffnungen 13, 13' auf, die in der in Fig. 1 gezeigten Ausführungsform jeweils schlitzförmig ausgebildet sind. In alternativen Ausführungsformen kann sich auch nur eine der Elementöffnungen 13, 13' auf der Schnittgeraden zwischen der Spiegelebene 9 und dem Wandbefestigungsteil 2 befinden, während weitere Elementöffnungen symmetrisch zur Spiegelebene 9 in dem Wandbefestigungsteil 2 ausgebildet sind. Ebenso ist es denkbar, dass das Wandbefestigungsteil 2 der erfindungsgemäßen verstellbaren Montagekonsole 1 ausschließlich über Elementöffnungen 13, 13' verfügt, die zueinander paarweise spiegelsymmetrisch zur Spiegelebene 9 angeordnet sind.

Durch die beiden Elementöffnungen 13, 13' sind als Haken ausgebildete Halteelemente 14, 14' des ersten Teleskopelements 3 geführt.

Hinsichtlich der Funktionsweise, Herstellung und Eigenschaften des Leitungsführungs- bzw. Geräteeinbaukanals sowie der Montage an der erfindungsgemäßen Montagekonsole 1 soll auf die DE 10 2012 102 062 A1 verwiesen werden, auf deren diesbezüglichen Offenbarungsgehalt hiermit explizit Bezug genommen wird.

Das erste Teleskopelement 3 ist ein Blech aus Stahl, an dessen einem Ende die beiden hakenförmigen Halteelemente 14, 14' angeordnet sind. Zur Befestigung des ersten Teleskopelements 3 an dem Wandbefestigungsteil 2 werden die beiden Halteelemente 14, 14' durch die Elementöffnungen 13, 13' des Wandbefestigungsteils 2 geführt und nach unten gedrückt, so dass die Elementöffnungen 13, 13' durch die Halteelemente 14, 14' hintergriffen werden.

An der Seite des Halteelementes 14' ist das erste Teleskopelement 3 abgeschrägt ausgeführt, so dass sich die Breite des ersten Teleskopelements 3 an der von den Halteelementen 14, 14' abgewandten Seite bis ungefähr auf die Breite der beiden zweiten Teleskopelemente 4, 4' verringert. An der Oberseite des ersten Teleskopelements 3 sind Haltelaschen 15, 15', 15" zur Befestigung von Lamellenhaltern (nicht dargestellt) angeordnet, die in der in Fig. 1 gezeigten Ausführungsform durch Umbiegen entsprechender Laschen gebildet worden sind.

Die beiden zweiten Teleskopelemente 4, 4' sind in dieser Ausführungsform der vorliegenden Erfindung jeweils rechteckige schmale Bleche, deren jeweils eines Ende einen umgebogenen Bereich 16, 16' aufweist. Über die beiden umgebogenen Bereiche 16, 16' erfolgt eine Schraubverbindung zwischen den zweiten Teleskopelementen 4, 4' und dem Kanalbefestigungselement 5. Darüber hinaus weist jedes zweite Teleskopelement 4, 4' ein Langloch 17 auf. Durch dieses Langloch 17 ist eine Schraube 18 geführt, die wiederum durch eine entsprechende Bohrung (nicht gezeigt) des ersten Teleskopelements 3 und ein entsprechendes Langloch 17 des zweiten Teleskopelements 4' geführt ist. Durch Lösen einer Kontermutter (nicht gezeigt) werden die zweiten Teleskopelemente 4, 4' ausziehbar bzw. relativ zum ersten Teleskopelement 3 verschiebbar und durch Festziehen der Kontermutter wieder fixierbar, so dass eine veränderbare Ausladung der erfindungsgemäßen verstellbaren Montagekonsole 1 erzielbar ist.

In alternativen Ausführungsformen können die Haltelaschen 15, 15', 15" zur Befestigung von Lamellenhaltern auch an die zweiten Teleskopelemente 4, 4' angeformt sein. Dabei sind die Haltelaschen 15, 15', 15" derart ausgebildet, dass sie jeweils vom ersten Teleskopelement 3 wegweisen.

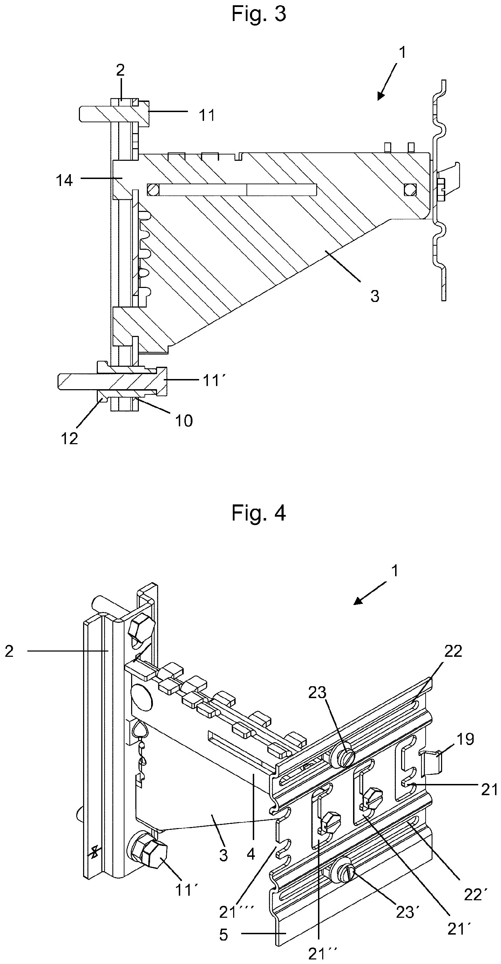

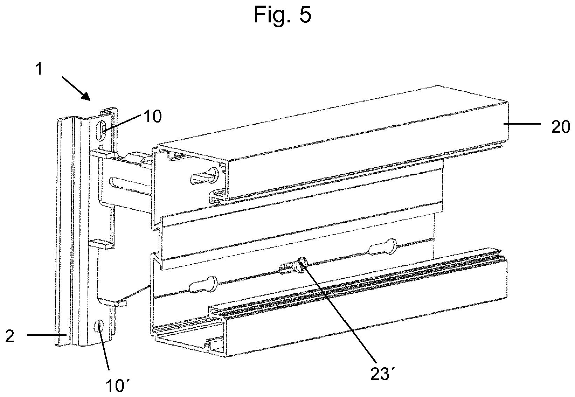

Im oberen und unteren Bereich weist das Kanalbefestigungselement 5 jeweils ein Langloch 22, 22' auf (vgl. Fig. 4). Durch die Langlöcher 22, 22' sind Schrauben 23, 23' geführt, die jeweils von einer entsprechenden Mutter auf der gegenüberliegenden Seite des Kanalbefestigungselements 5 gekontert sind. Im Randbereich weist das Kanalbefestigungselement 5 ein Halteteil 19 auf, an dem zur Montage eines Leitungsführungskanals bzw. Geräteeinbaukanals der Leitungsführungskanal 20 zunächst mit einer Ausnehmung in der Rückseite des Kanalbodens aufgehängt wird. Ein derartiger Leitungsführungskanal bzw. Geräteeinbaukanal ist aus der DE 10 2012 102 062 A1 bekannt. Der darin beschriebene Leitungsführungskanal ist zur Verwendung mit der erfindungsgemäßen verstellbaren Montagekonsole 1 besonders geeignet. Wenn der Leitungsführungskanal 20 zunächst nur von dem Halteteil 19 an der erfindungsgemäßen verstellbaren Montagekonsole 1 gehalten wird, ist der Leitungsführungskanal 20 noch in horizontaler Richtung verschiebbar, so dass eine Justierung des Leitungsführungskanals 20 vorgenommen werden kann. Ist die gewünschte horizontale Position des Leitungsführungskanals 20 erreicht, werden die Schrauben 23, 23' durch entsprechende Ausnehmungen an der Rückseite des Leitungsführungskanals 20 und durch die Langlöcher 22, 22' des Kanalbefestigungselements 5 der erfindungsgemäßen Montagekonsole 1 geführt und die Enden der Schrauben 23, 23' werden an der Rückseite des Kanalbefestigungselements 5 durch entsprechende Kontermuttern gekontert. Nach dem Festziehen der Muttern sitzt der Leitungsführungskanal 20 fest am Kanalbefestigungselement 5 der erfindungsgemäßen verstellbaren Montagekonsole 1. Fig. 5 zeigt eine perspektivische Ansicht eines Leitungsführungskanals 20 an einer verstellbaren Montagekonsole 1 gemäß einer weiteren Ausführungsform der vorliegenden Erfindung.

Im mittleren Bereich weist das Kanalbefestigungsteil 5 Verbindungsanordnungen 21, 21', 21", 21'" auf, durch die eine Schraubverbindung des Kanalbefestigungselements 5 mit den umgebogenen Bereichen 16, 16' der zweiten Teleskopelemente 4, 4' erfolgt. In der gezeigten Ausführungsform sind die Verbindungsanordnungen 21, 21', 21", 21"' E-förmige Ausstanzungen im Kanalbefestigungsteil 5 mit einem langen vertikalen Hauptabschnitt, an denen jeweils drei horizontale Nebenabschnitte angefügt sind. Die Verbindungsanordnungen 21, 21', 21" sind dabei jeweils identisch, während die Verbindungsanordnung 21'" am Rand des Kabelbefestigungselement 5 angeordnet ist, so dass der vertikale Hauptabschnitt des Verbindungsanordnung 21"' entfällt.

Die Verbindungsanordnungen 21, 21', 21", 21'" dienen zur vertikalen Ausrichtung des Kanalbefestigungselements 5 relativ zu den zweiten Teleskopelementen 4, 4'. Damit ist das Kanalbefestigungselement 5 dazu in der Lage, dass der Kanal 20 aufgrund der Langlöcher 22, 22' in horizontaler Richtung und aufgrund der Verbindungsanordnungen 21, 21', 21", 21'" in vertikaler und horizontaler Richtung ausrichtbar ist.

Fig. 2 zeigt eine Draufsicht auf die in Fig. 1 gezeigte Ausführungsform der verstellbaren Montagekonsole gemäß der vorliegenden Erfindung. Ebenso geht aus Fig. 2 die Lage der Symmetrieebenen 9 in der erfindungsgemäßen Montagekonsole 1 hervor.

Fig. 3 zeigt eine Längsschnittansicht entlang der Spiegelebene 9 durch die in Fig. 1 und 2 gezeigte Ausführungsform der erfindungsgemäßen Montagekonsole 1. Hierbei ist zu erkennen, dass durch die untere Durchgangsbohrung 10' durch das Wandbefestigungsteil 2 zusätzlich zum Befestigungselement 11' ein Stützfuß 12 geführt ist. An seiner Außenseite weist das als Schraube ausgeführte Befestigungselement 11' ein Außengewinde auf, über das das Befestigungselement 11' in einen ebenfalls durch die Durchgangsbohrung 10' des Wandbefestigungsteil 2 geführten Stützfuß 12 geführt ist. An seiner Außenwandung weist der Stützfuß 12' ein Außengewinde auf, durch das der Stützfuß 12 in ein komplementäres Gewinde in der Wandung der Durchgangsbohrung 10' des Wandbefestigungsteils 2 geführt ist. Ist die erfindungsgemäße verstellbare Montagekonsole 1 nun über die Befestigungselemente 11 und 11' an einer Wand festgelegt, kann die Winkeleinstellung bzw. der Neigungswinkel des Wandbefestigungsteils 2 und damit der gesamten erfindungsgemäßen verstellbaren Montagekonsole 1 relativ zur Wand durch Drehen des Stützfußes relativ zum Befestigungselement 11' erfolgen.

Die Erfindung wurde vorangehend exemplarisch unter Bezugnahme auf die in den Figuren dargestellten Ausführungsformen der vorliegenden Erfindung im Detail erläutert. Es versteht sich jedoch, dass der Fachmann auf dieser Offenbarung weitere Ausführungen der vorliegenden Erfindung erkennt, ohne den Schutzbereich der beigefügten Ansprüche zu verlassen.

## Patentansprüche

1. Verstellbare Montagekonsole (1) zur Befestigung eines Leitungsführungskanals (20) an einer Wand, umfassend:
(a) ein Wandbefestigungsteil (2), das spiegelsymmetrisch zu einer Spiegelebene (9) ausgebildet ist, die das Wandbefestigungsteil (2) in seiner Längsrichtung schneidet
(b) mindestens ein mit dem Wandbefestigungsteil (2) in Eingriff befindliches, erstes Teleskopelement (3),
(c) mindestens ein zweites Teleskopelement (4, 4'), und
(d) eine Kanalbefestigungselement (5),
**dadurch gekennzeichnet, dass**
.das Wandbefestigungsteil (3) mindestens zwei Elementöffnungen (13, 13') zur Durchführung von Halteelementen (14, 14') des erstes Teleskopelements (3) umfasst, wobei mindestens eine Elementöffnung (13, 13') entlang der Schnittgeraden der Spiegelebene (9) mit dem Wandbefestigungsteil (2) angeordnet ist und/oder mindestens zwei Elementöffnungen (13, 13') paarweise symmetrisch zur Schnittgeraden der Spiegelebene (9) mit dem Wandbefestigungsteil (2) angeordnet sind.

2. Verstellbare Montagekonsole (1) nach Anspruch 1, **dadurch gekennzeichnet, dass** das Wandbefestigungsteil (2) mindestens zwei Durchgangsbohrungen (10, 10') zur Durchführung von Befestigungselementen (11, 11') zur Wandbefestigung umfasst, wobei mindestens eine Durchgangsbohrungen (10, 10') entlang der Schnittgerade der Spiegelebene (9) mit dem Wandbefestigungsteil (2) angeordnet ist und/oder mindestens zwei Durchgangsbohrungen (10, 10') paarweise symmetrisch zur Schnittgeraden der Spiegelebene (9) mit dem Wandbefestigungsteil (2) angeordnet sind.

3. Verstellbare Montagekonsole (1) nach Anspruch 1 oder Anspruch 2, **dadurch gekennzeichnet, dass** die verstellbare Montagekonsole (1) ein erstes Teleskopelement (3) und zwei zweite Teleskopelemente (4, 4') umfasst, wobei das erste Teleskopelement (3) zwischen den zweiten Teleskopelementen (4, 4') angeordnet ist.

4. Verstellbare Montagekonsole (1) nach Anspruch 3, **dadurch gekennzeichnet, dass** die zweiten Teleskopelemente (4, 4') zumindest abschnittsweise an dem ersten Teleskopelement (3) anliegen.

5. Verstellbare Montagekonsole (1) nach Anspruch 3 oder Anspruch 4, **dadurch gekennzeichnet, dass** das erste Teleskopelement (3) zumindest abschnittsweise in der Symmetrieebene (9) angeordnet ist.

6. Verstellbare Montagekonsole (1) nach einem der Ansprüche 3 bis 5, **dadurch gekennzeichnet, dass** die zweiten Teleskopelemente (4, 4') zumindest abschnittsweise spiegelsymmetrisch zur Symmetrieebene angeordnet sind.

7. Verstellbare Montagekonsole (1) nach einem der Ansprüche 1 bis 6, **dadurch gekennzeichnet, dass** die zweiten Teleskopelemente (4, 4') an ihrem dem Kanalbefestigungselement (5) zugewandten Ende jeweils einen umgebogenen Bereich (16, 16') aufweisen, über den jeweils eine Verbindung zwischen den zweiten Teleskopelementen (4, 4') und dem Kanalbefestigungselement (5) erfolgt.

8. Verstellbare Montagekonsole (1) nach einem der Ansprüche 1 bis 7, **dadurch gekennzeichnet, dass** das Kanalbefestigungselement (5) mindestens ein Halteteil (19) für einen Leitungsführungskanal (20) umfasst.

9. Verstellbare Montagekonsole (1) nach einem der Ansprüche 1 bis 8, **dadurch gekennzeichnet, dass** erste Teleskopelemente (3) mit unterschiedlich weiter Ausladung mit dem Wandbefestigungsteil (2) verbindbar sind und/oder zweite Teleskopelemente (4, 4') mit unterschiedlich weiter Ausladung mit dem ersten Teleskopelement (3) verbindbar sind.

## Claims

1. Adjustable mounting bracket (1) for fastening a line routing duct (20) to a wall, comprising:
(a) a wall fastening part (2) which is formed mirror-symmetrically with respect to a mirror plane (9) which intersects the wall fastening part (2) in its longitudinal direction,
(b) at least one first telescopic element (3) which is in engagement with the wall fastening part (2),
(c) at least one second telescopic element (4, 4'), and
(d) a duct fastening element (5),
**characterized in that**
the wall fastening part (3) comprises at least two element openings (13, 13') for the conduction of holding elements (14, 14') of the first telescopic element (3), wherein at least one element opening (13, 13') is arranged along the intersecting line of the mirror plane (9) with the wall fastening part (2), and/or at least two element openings (13, 13') are arranged in pairs symmetrically with respect to the intersecting line of the mirror plane (9) with the wall fastening part (2).

2. Adjustable mounting bracket (1) according to Claim 1, **characterized in that** the wall fastening part (2) comprises at least two through bores (10, 10') for the conduction of fastening elements (11, 11') for the wall fastening, wherein at least one through bore (10, 10') is arranged along the intersecting line of the mirror plane (9) with the wall fastening part (2), and/or at least two through bores (10, 10') are arranged in pairs symmetrically with respect to the intersecting line of the mirror plane (9) with the wall fastening part (2).

3. Adjustable mounting bracket (1) according to Claim 1 or Claim 2, **characterized in that** the adjustable mounting bracket (1) comprises a first telescopic element (3) and two second telescopic elements (4, 4'), wherein the first telescopic element (3) is arranged between the second telescopic elements (4, 4').

4. Adjustable mounting bracket (1) according to Claim 3, **characterized in that** the second telescopic elements (4, 4') lie at least in sections against the first telescopic element (3).

5. Adjustable mounting bracket (1) according to Claim 3 or Claim 4, **characterized in that** the first telescopic element (3) is arranged at least in sections in the plane of symmetry (9).

6. Adjustable mounting bracket (1) according to one of Claims 3 to 5, **characterized in that** the second telescopic elements (4, 4') are arranged at least in sections mirrorsymmetrically with respect to the plane of symmetry.

7. Adjustable mounting bracket (1) according to one of Claims 1 to 6, **characterized in that** the second telescopic elements (4, 4') both have, at their end facing the duct fastening element (5), a bent-over region (16, 16') via which a connection is in each case undertaken between the second telescopic elements (4, 4') and the duct fastening element (5).

8. Adjustable mounting bracket (1) according to one of Claims 1 to 7, **characterized in that** the duct fastening element (5) comprises at least one holding part (19) for a line routing duct (20).

9. Adjustable mounting bracket (1) according to one of Claims 1 to 8, **characterized in that** the first telescopic elements (3) having extensions of differing length are connectable to the wall fastening part (2), and/or second telescopic elements (4, 4') having extensions of differing length are connectable to the first telescopic element (3).

## Revendications

1. Console de montage réglable (1) destinée à la fixation d'un canal de guidage de conduite (20) à un mur, comprenant:
(a) une partie de fixation murale (2) qui est de forme symétrique par rapport à un plan de réflexion (9), qui coupe la partie de fixation murale (2) selon sa direction longitudinale,
(b) au moins un premier élément télescopique (3) se trouvant en prise avec la partie de fixation murale (2),
(c) au moins un deuxième élément télescopique (4, 4'), et
(d) un élément de fixation de canal (5),
**caractérisée en ce que** la partie de fixation murale (3) comprend au moins deux ouvertures d'élément (13, 13') destinées au passage d'éléments de maintien (14, 14') du premier élément télescopique (3), dans laquelle au moins une ouverture d'élément (13, 13') est disposée le long de la droite d'intersection du plan de réflexion (9) avec la partie de fixation murale (2) et/ou au moins deux ouvertures d'élément (13, 13') sont disposées par paires de façon symétrique par rapport à la droite d'intersection du plan de réflexion (9) avec la partie de fixation murale (2).

2. Console murale réglable (1) selon la revendication 1, **caractérisée en ce que** la partie de fixation murale (2) comprend au moins deux trous de passage (10, 10') pour le passage d'éléments de fixation (11, 11') destinés à la fixation murale, dans laquelle au moins une ouverture de passage (10, 10') est disposée le long de la droite d'intersection du plan de réflexion (9) avec la partie de fixation murale (2) et/ou au moins deux trous de passage (10, 10') sont disposés par paires de façon symétrique par rapport à la droite d'intersection du plan de réflexion (9) avec la partie de fixation murale (2).

3. Console de montage réglable (1) selon la revendication 1 ou la revendication 2, **caractérisée en ce que** la console de montage réglable (1) comprend un premier élément télescopique (3) et deux deuxièmes éléments télescopiques (4, 4'), dans laquelle le premier élément télescopique (3) est disposé entre les deuxièmes éléments télescopiques (4, 4').

4. Console de montage réglable (1) selon la revendication 3, **caractérisée en ce que** les deuxièmes éléments télescopiques (4, 4') s'appliquent au moins en partie sur le premier élément télescopique (3).

5. Console de montage réglable (1) selon la revendication 3 ou la revendication 4, **caractérisée en ce que** le premier élément télescopique (3) est disposé au moins en partie dans le plan de symétrie (9).

6. Console de montage réglable (1) selon l'une quelconque des revendications 3 à 5, **caractérisée en ce que** les deuxièmes éléments télescopiques (4, 4') sont disposés au moins en partie de façon symétrique par rapport au plan de symétrie.

7. Console de montage réglable (1) selon l'une quelconque des revendications 1 à 6, **caractérisée en ce que** les deuxièmes éléments télescopiques (4, 4') présentent à leur extrémité tournée vers l'élément de fixation de canal (5) respectivement une zone repliée (16, 16'), par laquelle une liaison est respectivement réalisée entre les deuxièmes éléments télescopiques (4, 4') et l'élément de fixation de canal (5).

8. Console de montage réglable (1) selon l'une quelconque des revendications 1 à 7, **caractérisée en ce que** l'élément de fixation de canal (5) comprend au moins une partie de maintien (19) pour un canal de guidage de conduite (20).

9. Console de montage réglable (1) selon l'une quelconque des revendications 1 à 8, **caractérisée en ce que** des premiers éléments télescopiques (3) avec un porte-à-faux de longueur différente peuvent être assemblés à la partie de fixation murale (2) et/ou des deuxièmes éléments télescopiques (4, 4') avec un porte-à-faux de longueur différente peuvent être assemblés au premier élément télescopique (3).
